# EUROPÄISCHE PATENTANMELDUNG

(11) **EP 4 600 618 A1**
(43) Veröffentlichungstag der Anmeldung: **13.08.2025**
(21) Anmeldenummer: 25155558.7
(22) Anmeldetag: 03.02.2025
(51) Int. Cl.: G01H 1/00, G01H 1/14, G01H 3/04, G01H 3/06, G01N 29/14, F01D 21/00, G01M 15/14

(54) **VERFAHREN ZUM ÜBERWACHEN EINER STRÖMUNGSMASCHINE**

(30) Priorität: 08.02.2024 DE 102024103612
(71) Anmelder: MTU Aero Engines AG, 80995 München (DE)
(72) Erfinder: Schoenberger, Georg, 80995 München (DE)

(57) **Zusammenfassung**

Die vorliegende Erfindung betrifft ein Verfahren zum Überwachen einer Strömungsmaschine, insbesondere eines Flugtriebwerks, wobei die Strömungsmaschine mit einem Mikrofon-Array ausgestattet ist, wobei das Mikrofon-Array mindestens zwei Mikrofone aufweist, die bezogen auf eine Längsachse der Strömungsmaschine auf unterschiedlichen Axialpositionen und/oder Umlaufpositionen angeordnet sind, bei welchem Verfahren
i) während eines Betriebs der Strömungsmaschine mit dem Mikrofon-Array von der Strömungsmaschine abgegebene Geräusche erfasst werden.

## Beschreibung

### Technisches Gebiet

Die vorliegende Erfindung betrifft ein Verfahren zum Überwachen einer Strömungsmaschine, insbesondere eines Flugtriebwerks.

### Stand der Technik

Der Überprüfung von Strömungsmaschinen, insbesondere Flugtriebwerken, kann z. B. aufgrund etwaiger Fehlerfolgen im Versagensfall eine besondere Bedeutung zukommen. Deshalb werden bspw. Flugtriebwerke regelmäßig einer Inspektion bzw. Wartung unterzogen, was z. B. eine optische Untersuchung auf Schadstellen umfassen kann, insbesondere von im Gaskanal angeordneten Bauteilen. Solche Schadstellen bzw. Schädigungen können bspw. auf Partikeleinschläge oder Abnutzungen im Flugbetrieb zurückgehen, was aber nur einige der möglichen Fehlerzustände betrifft. Generell kann bei einer solchen Wartung eine Herausforderung darin liegen, dass sie nur in bestimmten Intervallen erfolgt, also jeweils erst nach einer bestimmten Betriebsdauer. Dies kann bspw. bei Fehlerzuständen, die früh im Wartungsintervall auf treten oder sich schnell verschlechtern, eine rechtzeitige Detektion zumindest erschweren.

### Darstellung der Erfindung

Der vorliegenden Erfindung liegt das technische Problem zugrunde, ein vorteilhaftes Verfahren zum Überwachen einer Strömungsmaschine, insbesondere eines Flugtriebwerks, anzugeben.

Dies wird mit dem Verfahren nach Anspruch 1 gelöst. Für dieses wird bzw. ist die Strömungsmaschine mit einem Mikrofon-Array ausgestattet, das mindestens zwei Mikrofone aufweist. Diese sind bezogen auf eine Längsachse der Strömungsmaschine auf unterschiedlichen Axialpositionen und/oder Umlaufpositionen angeordnet, mit dem Mikrofon-Array kann also bildlich gesprochen entlang der Strömungsmaschine und/oder umlaufend in diese "hineingehorcht" werden. Generell lässt sich mit der akustischen Erfassung eine Überwachung in den Betrieb implementieren. Dabei kann das Mikrofon-Array eine räumliche Auflösung eröffnen, also bspw. eine gewisse Lokalisierung auftretender Anomalien erlauben.

Mit dem Mikrofon-Array werden im Betrieb der Strömungsmaschine von dieser abgegebene Geräusche erfasst (Schritt i), die anschließend ausgewertet werden und so bspw. einen Rückschluss auf etwaige Abweichungen erlauben können. Wie nachstehend im Detail diskutiert, kann die Auswertung bevorzugt KI-basiert erfolgen (Schritt ii), wobei sich mit dieser Kombination aus akustischer Erfassung und KIbasierter Auswertung die Strömungsmaschine dann bspw. auch in-situ in der Anwendung überwachen lässt, bspw. im Flugbetrieb. Auftretende Anomalien bzw. Fehlerzustände lassen sich so mitunter instantan oder jedenfalls nach einer im Vergleich zu Wartungsintervallen kurzen Dauer feststellen. Exemplarisch kann es sich bei einem solchen Fehlerzustand bspw. um eine Unwucht oder um nieder- bzw. hochfrequente Gasvibrationen (*buzz and screech*) oder um eine Jet Pipe Resonanz handeln, vgl. die nachstehende Beschreibung im Detail.

Weitere bevorzugte Ausgestaltungen finden sich in den abhängigen Ansprüchen und der gesamten Offenbarung, wobei in der Darstellung der Merkmale nicht immer im Einzelnen zwischen Verfahrens- bzw. Verwendungs- und Vorrichtungsaspekten unterschieden wird; jedenfalls implizit ist die Offenbarung hinsichtlich sämtlicher Anspruchskategorien zu lesen. Wird bspw. das Verfahren unter Verweis auf eine Strömungsmaschine mit einem spezifisch ausgestalteten Mikrofon-Array diskutiert, ist dies zugleich als Offenbarung einer mit einem solchen Mikrofon-Array ausgestatteten Strömungsmaschine zu lesen.

Die mit den einzelnen Mikrofonen gemessenen Geräusche können in einer elektronischen Auswerteeinheit zusammengeführt werden. In dieser kann eine Aufbereitung der Messdaten, z. B. Zerlegung in Frequenzanteile, und optional auch die KI-basierte Auswertung erfolgen. Die Auswerteeinheit bzw. Auswertung kann aber auch ausgelagert sein, etwa in eine Rechnereinheit des Fluggeräts bzw. Flugzeugs integriert (z. B. Bordcomputer) oder im Allgemeinen auch extern. Unabhängig von der Umsetzung im Einzelnen können Gegenstand dieser Auswertung bspw. die Laufzeiten der Schallwellen sein, alternativ oder zusätzlich kann auch das Frequenzspektrum betrachtet werden.

Die Angaben "axial", "radial" und "umlaufend", sowie die zugehörigen Richtungen bzw. Positionen (Axialpositionen, Umlaufpositionen etc.), beziehen sich auf eine Längsachse der Strömungsmaschine. Um diese Längsachse können bspw. im Betrieb die Rotoren der Strömungsmaschine rotieren, sie kann also mit deren Drehachse zusammenfallen. Ferner kann die Strömungsmaschine im Betrieb entlang der Längsachse von dem Verdichter- bzw. Heißgas durchströmt werden, etwa in einem ring- bzw. hülsenförmig um die Längsachse angeordneten Gaskanal.

Funktional betrachtet kann sich die Strömungsmaschine in Verdichter, Brennkammer und Turbine gliedern. Im Verdichter wird ein Verdichterfluid komprimiert, bspw. angesaugte Luft, wobei in der nachgelagerten Brennkammer Treibstoff (z. B. Kerosin) hinzugemischt und dieses Gemisch verbrannt wird. In der nachgelagerten Turbine wird das entstehende Heißgas expandiert, wobei bspw. auch anteilig Energie zum Antreiben der Rotoren entzogen wird.

Gemäß einer bevorzugten Ausführungsform weist das Mikrofon-Array auf mindestens 3 unterschiedlichen Axialpositionen jeweils ein Mikrofon auf, bevorzugt auf mindestens 5, 10, 15 oder 20 unterschiedlichen Axialpositionen. Mögliche Obergrenzen, die bspw. auch von der Triebwerksgröße abhängen können, liegen bspw. bei höchstens 500, 400, 300, 200, 100 bzw. 50 Axialpositionen. Die Axialpositionen können innerhalb eines einzelnen Moduls (Verdichter, Brennkammer oder Turbine) liegen, bevorzugt erstrecken sie sich über mindestens zwei oder alle drei Module hinweg. Dies kann bspw. die Zahl der überwachbaren Fehlerzustände erweitern.

In bevorzugter Ausgestaltung weist das Mikrofon-Array auf mindestens zwei unterschiedlichen Umlaufpositionen Mikrofone auf. Bildlich gesprochen kann damit von unterschiedlichen Seiten in das Triebwerk "hineingehorcht" werden, bevorzugt sind die Mikrofone auf mindestens drei Umlaufpositionen verteilt (mögliche Obergrenzen können bspw. bei 50, 20, 10 bzw. 6 Umlaufpositionen liegen).

Gemäß einer bevorzugten Ausführungsform weist das Mikrofon-Array auf mindestens fünf unterschiedlichen Axialpositionen jeweils mindestens drei Mikrofone auf, die auf der jeweiligen Axialposition auf unterschiedlichen Umlaufpositionen angeordnet sind. In anderen Worten gibt es auf mindestens fünf Axialpositionen mit jeweils mindestens drei Umlaufpositionen Mikrofone (umfasst das Mikrofon-Array also mindestens 15 Mikrofone). Bezüglich weiterer möglicher Unter- und Obergrenzen für die Zahl der Axial- und Umlaufpositionen wird auf die vorstehenden Absätze verwiesen. Im Allgemeinen können die Mikrofone dabei von Axialposition zu Axialposition bspw. auch zueinander verdreht sein, bspw. helixförmig. Bevorzugt sind sie von Axialposition zu Axialposition jeweils auf derselben Umlaufposition angeordnet, also von einem etwaigen Radialversatz abgesehen axial fluchtend.

Gemäß einer bevorzugten Ausführungsform sind die Axialpositionen äquidistant verteilt und/oder sind die Umlaufpositionen gleichwinklig verteilt, liegen also gleich große Winkel zwischen benachbarten Umlaufpositionen vor. Bei drei Umlaufpositionen können diese bspw. jeweils um 120° zueinander verdreht sein (bei vier Umlaufpositionen um 90° etc.).

In bevorzugter Ausgestaltung erfolgt Schritt i) zumindest anteilig während eines Flugbetriebs, also während des Flugs in der Luft. Alternativ oder zusätzlich kann Schritt i) jedenfalls anteilig während des Hochfahrens des Flugtriebwerks und/oder während des Auslaufens des Flugtriebwerks nach dem Flugbetrieb erfolgen. Dies kann bspw. wegen einer im Vergleich zum Flugbetrieb reduzierten Geräuschkulisse Vorteile haben (weniger Umgebungs- bzw. Störgeräusche). Insofern können sich eine Erfassung während des Flugbetriebs und eine Erfassung davor/danach auch ergänzen.

Gemäß einer bevorzugten Ausführungsform werden die mit dem Mikrofon-Array erfassten Geräusche KI-basiert ausgewertet, also mit einem KI-Algorithmus.

In bevorzugter Ausgestaltung werden die mit dem Mikrofon-Array erfassten Geräusche der Strömungsmaschine für die bzw. bei der Auswertung in ihre Frequenzanteile zerlegt und werden dann zumindest auch diese Frequenzanteile KI-basiert ausgewertet. Dies kann bspw. durch eine Fourier-Transformation erfolgen, z. B. durch FFT (*Fast Fourier Transformation*). Unabhängig von der Umsetzung im Einzelnen kann die Frequenzanalyse mit einer Auswertung der Laufzeiten und/oder Amplituden kombiniert oder auch alternativ dazu vorgesehen sein.

In bevorzugter Ausgestaltung erfolgt die KI-basierte Auswertung der erfassten Geräusche in einer Auswerteeinheit, die in bzw. an dem Fluggerät, insbesondere Flugzeug, integriert ist. Dabei kann diese Auswerteeinheit mit dem Mikrofon-Array am Triebwerk integriert oder auch an anderer Stelle des Fluggeräts vorgesehen sein, z. B. auch als Teil des Bordcomputers.

Indem Schritt ii) im Fluggerät selbst vorgenommen wird, kann dort das Ergebnis bzw. der Status der Überwachung zeitnah vorliegen, bspw. unabhängig von einer Daten- bzw. Kommunikationsanbindung. Die Auswerteeinheit kann, wenn ein Fehlerzustand festgestellt wird, bspw. automatisiert Maßnahmen einleiten (z. B. über einen elektrischen Regler), etwa Sofortmaßnahmen zum Schutz des Flugtriebwerks und/oder Fluggeräts bzw. Flugzeugs. Alternativ oder zusätzlich kann im Cockpit bspw. ein Status angezeigt werden, etwa in Verbindung mit Handlungsempfehlungen zur pilotenseitigen Umsetzung.

Gemäß einer bevorzugten Ausführungsform erfolgt die KI-basierte Auswertung gemäß Schritt ii) auf zumindest einen der nachstehend aufgeführten Fehlerzustände:
- Jet Pipe Resonanz und/oder nieder- und hochfrequente Gasvibrationen (*buzz and screech*) (dadurch bspw. schnellere Diagnose und schnellerer Eingriff in die Regelung, damit Vermeidung kritischer Arbeitsbereiche, insbesondere bei militärischen Flugtriebwerken);
- Unwucht (z. B. fein- bzw. hochgranulare Verortung der Ursache, etwa über die Stufen bzw. Module hinweg, im Vergleich zu mechanischen Vibrationsmessungen höhere Auflösungen möglich);
- Triebwerkspumpen (dadurch schnelle Erkennung und bei entsprechender Regelung Vermeidung gefährlicher Arbeitspunkte, insbesondere bei militärischen Flugtriebwerken);
- Anomalie im Zündverhalten von Brennkammer und/oder Nachbrenner (verschleißfreie Überwachung);
- Anomalie von Anbauteilen, also des Versorgungssystems, bspw. von Leitungen, Ventilen etc. (Erkennung von z. B. Undichtigkeiten bzw. Fehlverhalten von Aktuatoren);
- Lagerschaden (frühzeitige Erkennung eines sich anbahnenden Lagerschadens kann bspw. Sekundärschädigungen mit weiteren Verschlechterungen vorbeugen bzw. vermeiden);
- Asymmetrisches Brennen (Erkennung von Anomalien in den Brennkammern);
- Eindringen von Fremdkörpern (bspw. Rückschluss auf den Herkunftsort des Fremdkörpers, intern oder extern, über die Signallaufzeiten, z. B. auch Massebestimmung);
- Schaufeldefekte, bzw. die Strukturelle Veränderung von Luftleitschaufeln, Luftschaufeln der einzelnen Triebwerksstufen (Fan, der Verdichter oder Turbineneinheiten).

Gemäß einer bevorzugten Ausführungsform werden die im Betrieb der Strömungsmaschine aufgenommenen Geräusche und / oder die Miteinbeziehung des theoretischen Betriebszustands zusätzlich mit weiteren im Betrieb ermittelten Messergebnissen abgeglichen, bspw. mit Messdaten von einem oder mehreren Sensoren, wie z. B. Drehzahlsensor(en) und/oder Temperatursensor(en).

Die Anmeldung betrifft auch ein Verfahren zum Trainieren einer KI, also eines KI-Algorithmus (Künstliche Intelligenz, KI). Die Trainingsdaten werden hierbei an einer Strömungsmaschine ermittelt, die mit einem Mikrofon-Array mit axial und/oder umlaufend verteilt angeordneten Mikrofonen ausgestattet ist, vgl. die vorstehende Beschreibung im Detail. Bevorzugt wird die Strömungsmaschine zur Ermittlung der Trainingsdaten auf einem Prüfstand montiert, also stationär in einem Prüfumfeld.

Mit den Trainingsdaten kann dann z. B. ein sogenannter *unsupervised learning-Al*gorithmus trainiert werden, mit dem sich die Daten ohne im Voraus bekannte Zielwerte auf Muster hin untersuchen lassen. Damit können bspw. Auffälligkeiten von einer gewöhnlichen Varianz unterschieden werden, die Daten lassen sich bspw. nach Merkmalen ("Features") clustern, also nach Gemeinsamkeiten sortieren. Alternativ oder zusätzlich kann auch ein sogenannter *supervised-*learning-Algorithmus Anwendung finden, der bspw. angelernt und/oder überwacht werden kann.

Damit kann eine Korrelation zwischen anhand menschlicher Erfahrungswerte bzw. anderweitiger Untersuchungen identifizierten Fehlerzuständen und den aufgenommenen Geräuschen möglich sein. Die an einem Triebwerk bzw. der Strömungsmaschine mit einem bestimmten Fehlerzustand aufgenommenen Akustikdaten können hierfür entsprechend gekennzeichnet werden, was auch als "labeln" bezeichnet wird. Hierfür kann ein Abgleich bzw. eine Verknüpfung mit Messergebnissen aus dem Wartungs- und Inspektionsbereich geschaffen werden (was *Labels* wie bspw. "schlechte Lager", "unwuchtige Schaufeln", "Jet Pipe Resonanz" etc. ergeben kann).

In bevorzugter Ausgestaltung wird die anhand von am Prüfstand aufgenommenen Trainingsdaten trainierte Algorithmik dann anhand von Daten weiter trainiert, die im Feld, insbesondere im Flugbetrieb aufgenommen werden (vorzugsweise an baugleichen Triebwerken).

Beispielsweise können gezielt Fehlerzustände an bestimmten Triebwerkspositionen erzeugt werden. Dies erzeugt eine vom Normalbetrieb abweichende Schallsignatur. Anhand von Laufzeitunterschieden und der bekannten Position des Fehlers können diese Eingangsdaten verwendet werden, um ein KI-System dahingehend zu trainieren, eine Position eines Fehlers innerhalb eines Triebwerks bzw. einer Strömungsmaschine zu lokalisieren.

In einer weiteren bevorzugten Ausführungsform können in einer Triebwerksflotte mehrere Triebwerke kontinuierlich mit einem vorstehend beschriebenen Mikrofon-Array akustisch überwacht und die Daten aufgezeichnet werden. Bei regelmäßig vorgesehenen Triebwerkswartungen (sog. Shop-Visits) kann ein Ist-Zustand des Triebwerks erfasst und mit den vom Mikrofon-Array erfassten Daten abgeglichen werden. Die während einer Maintenance erkannten Veränderungen am Triebwerk, können so akustischen Daten zugeordnet werden. Unter Zuhilfenahme dieser korrelierten akustischen Daten (mit Hardware des Triebwerks bei Inspektion) kann eine KI-Software trainiert werden. In einer Weiterbildung kann für einen beim Shop-Visit ermittelten Ist-Zustand ein theoretischer Wirkungsgrad bzw. Performance Daten mit im Stand der Technik bekannten Methoden berechnet werden. Diese berechneten Performance Daten können mit der durch das Mikrofon-Array vor dem Shop-Visit aufgenommenen akustischen Signatur des Triebwerks korreliert werden, um eine KI-Software dazu zu trainieren einen Performance Zustand, insbesondere einen Wirkungsgradverlust, anhand der akustischen Signatur abzuschätzen/vorherzusagen.

Diese KI als Bestandteil des Engine Health Monitoring des fliegenden Triebwerk kann den Piloten warnen, wenn ein kritisches Ereignisse stattfand, oder eine Aussage liefern, ob das Triebwerk außerplanmäßig überprüft oder gewartet werden muss.

Die Anmeldung betrifft ferner eine Strömungsmaschine, insbesondere ein Flugtriebwerk, das für ein vorliegend offenbartes Verfahren eingerichtet ist. Dazu ist die Strömungsmaschine mit einem Mikrofon-Array ausgestattet, das mehrere axial und/oder umlaufend verteilt angeordnete Mikrofone aufweist, vgl. die übrige Offenbarung bezüglich möglicher weiterer Details.

Ferner betrifft die Anmeldung die Verwendung einer solchen Strömungsmaschine in einem vorliegend offenbarten Verfahren.

### Kurze Beschreibung der Zeichnungen

Im Folgenden wird die Erfindung anhand von Ausführungsbeispielen näher erläutert, wobei die einzelnen Merkmale auch in anderer Kombination erfindungswesentlich sein können.

Im Einzelnen zeigt
- Figur 1: eine Strömungsmaschine, nämlich ein Flugtriebwerk, mit einem Mikrofon-Array in einer schematischen Seitenansicht;
- Figur 2: eine schematische Axialansicht zu der Strömungsmaschine gemäß Figur 1;
- Figur 3: einige Verfahrensschritte in einem Flussdiagramm.

### Bevorzugte Ausführung der Erfindung

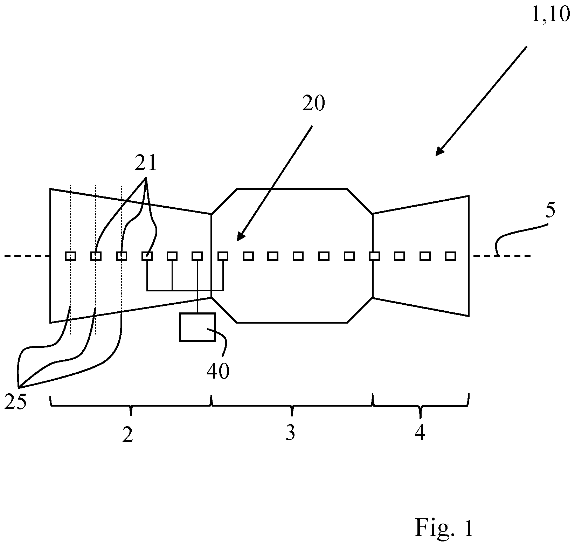

Fig. 1 zeigt eine Strömungsmaschine 1, im vorliegenden Beispiel ein Flugtriebwerk 10. Dieses gliedert sich funktional in Verdichter 2, Brennkammer 3 und Turbine 4, wobei im Betrieb in dem Verdichter 2 angesaugte Luft komprimiert wird. In der Brennkammer 3 wird Treibstoff, bspw. Kerosin, hinzugemischt und wird dieses Gemisch verbrannt, wobei das entstehende Heißgas in der nachgelagerten Turbine 4 expandiert wird. Das Heißgas treibt dabei typischerweise in mehreren Stufen angeordnete Rotoren (nicht dargestellt) der Turbine 4 an, wobei diese kinetische Energie auch zum Antreiben des Verdichters 2 genutzt wird.

Im Betrieb drehen die Rotoren um eine Längsachse 5, wobei es z. B. in dieser Rotationsbewegung aufgrund von Abnutzungen oder Fehlpassungen zu einer Unwucht kommen kann. Dies soll nur einen denkbaren Fehlerzustand illustrieren, bezüglich weiterer denkbarer Fehlerzustände wird auf die vorstehende Beschreibung verwiesen. Zur Überwachung auf einen oder mehrere solcher Fehlerzustände ist die Strömungsmaschine 1 mit einem Mikrofon-Array 20 ausgestattet, welches eine Vielzahl Mikrofone 21 aufweist. Diese sind, wie aus Figur 1 ersichtlich, axial verteilt entlang der Strömungsmaschine 1 angeordnet, also auf unterschiedlichen Axialpositionen 25.

Diese sind im vorliegenden Beispiel äquidistant entlang der Längsachse 5 verteilt, und zwar über Verdichter 2, Brennkammer 3 und Turbine 4 hinweg.

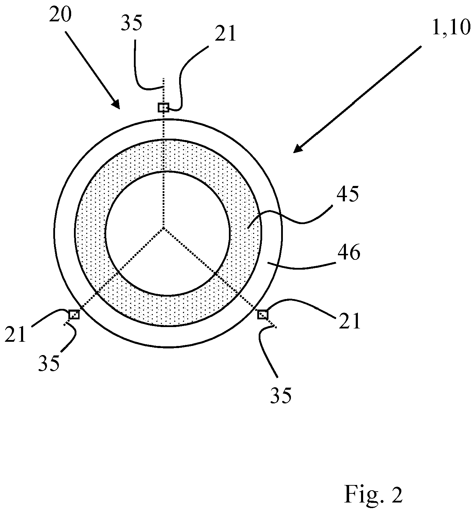

Wie aus der Axialansicht gemäß **Figur 2** ersichtlich, sind die Mikrofone 21 des Mikrofon-Arrays 20 ferner auch umlaufend verteilt, also auf unterschiedlichen Umlaufpositionen 35 um die Längsachse 5. In der Axialansicht ist je Umlaufposition 35 ein Mikrofon 21 zu erkennen, senkrecht zur Zeichenebene sind je Umlaufposition 35 jeweils eine Vielzahl Mikrofone axial aufeinanderfolgend angeordnet, analog der Darstellung gemäß Figur 1.

Mit einem jeweiligen Mikrofon 21 können jeweils im Betrieb von der Strömungsmaschine 1 abgegebene Geräusche erfasst werden, und zwar an seiner jeweiligen Axial- und Umlaufposition 25, 35. Diese Messdaten werden in einer in Figur 1 nur schematisch referenzierten Auswerteeinheit 40 zusammengeführt, was generell drahtlos oder kabelgebunden erfolgen kann (in Figur 1 ist der Übersichtlichkeit halber nur eine Verkabelung von vier Mikrofonen 21 gezeigt). Nach dieser Datenzusammenführung und gegebenenfalls -aufbereitung werden die mit dem Mikrofon-Array 20 erfassten Geräusche KI-basiert ausgewertet, also mit einem entsprechend trainierten KI-Algorithmus.

Damit können Anomalien bzw. Abweichungen der erfassten Geräusche mechanischen Anomalien im Betrieb der Strömungsmaschine 1 zugeordnet werden, bspw. einer Unwucht (oder anderen Fehlerzuständen). Dabei ergibt sich aufgrund der axial und umlaufend verteilt angeordneten Mikrofone 21 zudem eine gewisse Ortsauflösung, also mit gewisser Granularität eine Fehlerlokalisierung.

Wie aus der Seitenansicht gemäß Figur 1 und auch der Axialansicht gemäß Figur 2 ersichtlich, sind bzw. werden die Mikrofone 21 radial außerhalb des sogenannten *Engine Body* angeordnet. Sie sitzen also radial außerhalb des Gaskanals 45, bspw. auf bzw. an den Gaskanal 45 begrenzenden Strukturelementen 46 (z. B. Gaskanalplatten etc.). Nach radial außen können die Strömungsmaschine 1 und des Mikrofon-Array 20 dann bspw. von einer gesonderten Gehäusestruktur eingefasst werden, etwa im zivilen Luftfahrtbereich, alternativ können Sie auch direkt in das Fluggerät bzw. Flugzeug integriert sein.

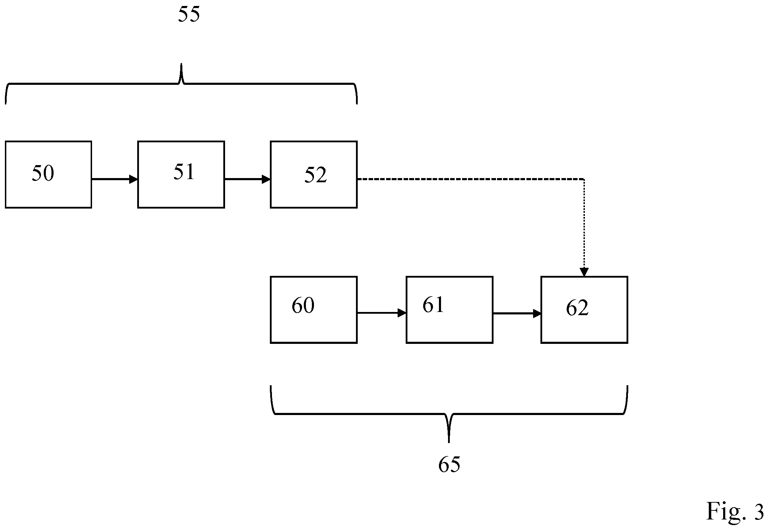

**Fig. 3** fasst einige Verfahrensschritte in einem Flussdiagramm zusammen. Wie vorstehend erläutert, werden das Mikrofon-Array und die KI-basierte Auswertung zum Überwachen 65 einer Strömungsmaschine in der Anwendung eingesetzt, bspw. eines Flugtriebwerks im Flugbetrieb. Zuvor wird für ein entsprechendes Trainieren 55 der KI-Algorithmik eine Strömungsmaschine auf einem Prüfstand mit einem Mikrofon-Array ausgestattet 50. Während des Betriebs auf dem Prüfstand werden dann die von der Strömungsmaschine abgegebenen Geräusche erfasst 51. Anschließend werden diese Messdaten mit Fehlerzuständen abgeglichen 52, also korreliert.

Zum Überwachen 65 einer Strömungsmaschine, bspw. eines baugleichen Flugtriebwerks, wird diese dann ebenfalls mit einem Mikrofon-Array ausgestattet 60. Dieses Mikrofon-Array ist analog jenem der Strömungsmaschine auf dem Prüfstand aufgebaut und angeordnet. Damit werden im Betrieb von der Strömungsmaschine abgegebene Geräusche erfasst 61, die anschließend KI-basiert ausgewertet werden 62. Letzteres kann eine Auswertung von Laufzeiten und/oder des Frequenzspektrums umfassen, vergleiche die Beschreibungseinleitung im Detail.

### BEZUGSZEICHENLISTE

| | |
|---|---|
| Strömungsmaschine | 1 |
| Verdichter | 2 |
| Brennkammer | 3 |
| Turbine | 4 |
| Längsachse | 5 |
| Flugtriebwerk | 10 |
| Mikrofon-Array | 20 |
| Mikrofone | 21 |
| Axialpositionen | 25 |
| Umlaufpositionen | 35 |
| Auswerteeinheit | 40 |
| Gaskanal | 45 |
| begrenzende Strukturelemente | 46 |
| Ausstatten | 50 |
| Abgleichen | 52 |
| Trainieren | 55 |
| Ausstatten | 60 |
| Geräuscherfassung | 61 |
| KI-basierte Auswertung | 62 |
| Überwachen | 65 |

## Patentansprüche

1. Verfahren zum Überwachen (65) einer Strömungsmaschine (1), insbesondere eines Flugtriebwerks (10),
wobei die Strömungsmaschine (1) mit einem Mikrofon-Array (20) ausgestattet ist,
wobei das Mikrofon-Array (20) mindestens zwei Mikrofone (21) aufweist, die bezogen auf eine Längsachse (5) der Strömungsmaschine (1) auf unterschiedlichen Axialpositionen (25) und/oder Umlaufpositionen (35) angeordnet sind,
bei welchem Verfahren
i) während eines Betriebs der Strömungsmaschine (1) mit dem Mikrofon-Array (20) von der Strömungsmaschine (1) abgegebene Geräusche erfasst werden (61).

2. Verfahren nach Anspruch 1, bei welchem das Mikrofon-Array (20) auf mindestens drei unterschiedlichen Axialpositionen (25) Mikrofone (21) aufweist und/oder auf mindestens zwei unterschiedlichen Umlaufpositionen (35) Mikrofone (21) aufweist.

3. Verfahren nach Anspruch 1 oder 2, bei welchem das Mikrofon-Array (20) auf mindestens fünf unterschiedlichen Axialpositionen (25) jeweils mindestens drei Mikrofone (21) aufweist, die auf unterschiedlichen Umlaufpositionen (35) angeordnet sind.

4. Verfahren nach einem der vorstehenden Ansprüche, bei welchem die unterschiedlichen Axialpositionen (25) äquidistant verteilt sind und/oder die unterschiedlichen Umlaufpositionen (35) gleichwinklig verteilt sind.

5. Verfahren nach einem der vorstehenden Ansprüche, bei welchem die Strömungsmaschine (1) ein Flugtriebwerk (10) ist, das an oder in einem Fluggerät verbaut ist, wobei Schritt i) jedenfalls anteilig während eines Flugbetriebs erfolgt.

6. Verfahren nach einem der vorstehenden Ansprüche, bei welchem die Strömungsmaschine (1) ein Flugtriebwerk (10) ist, das an oder in einem Fluggerät verbaut ist, wobei Schritt i) jedenfalls anteilig während eines Hochfahrens des Flugtriebwerks (10) vor einem Flugbetrieb und/oder während eines Auslaufens nach einem Flugbetrieb erfolgt.

7. Verfahren nach einem der vorstehenden Ansprüche, bei welchem Verfahren ferner
ii) die mit dem Mikrofon-Array (20) erfassten Geräusche KI-basiert ausgewertet werden (62).

8. Verfahren nach Anspruch 7, bei welchem die mit dem Mikrofon-Array (20) erfassten Geräusche in Frequenzanteile zerlegt werden und in Schritt ii) die Frequenzanteile KI-basiert ausgewertet werden.

9. Verfahren nach Anspruch 7 oder 8, bei welchem die KI-basierte Auswertung gemäß Schritt ii) in einer Auswerteeinheit (40) des Fluggeräts erfolgt.

10. Verfahren nach einem der Ansprüche 7 bis 9, bei welchem die Strömungsmaschine (1) ein Flugtriebwerk (10) ist, das an oder in einem Fluggerät verbaut ist, wobei im Zuge der KI-basierten Auswertung gemäß Schritt ii) eine Prüfung auf zumindest einen der folgenden Fehlerzustände erfolgt: Jet Pipe Resonanz, Niederfrequente Gasvibrationen, Hochfrequente Gasvibrationen, Unwucht, Triebwerkspumpen, Anomalie im Zündverhalten Brennkammer, Anomalie im Zündverhalten Nachbrenner, Anomalie von Anbauteilen, Lagerschaden, Asymmetrisches Brennen der Brennkammer, Eindringen von Fremdkörpern.

11. Verfahren nach einem der Ansprüche 7 bis 10, bei welchem bei der KI-basierten Auswertung in Schritt ii) zusätzlich Messdaten berücksichtigt werden, die mit einem anderen Sensor an der Strömungsmaschine (1) ermittelt werden.

12. Verfahren zum Trainieren einer KI für eine Anwendung in einem Verfahren nach einem der Ansprüche 7 bis 11, wobei
eine Strömungsmaschine (1) auf einem Prüfstand mit einem Mikrofon-Array (20) ausgestattet wird (50),
wobei das Mikrofon-Array (20) mindestens zwei Mikrofone (21) aufweist, die bezogen auf eine Längsachse (5) der Strömungsmaschine (1) auf unterschiedlichen Axialpositionen (25) und/oder Umlaufpositionen (35)angeordnet sind,
bei welchem Verfahren
i) während eines Betriebs der Strömungsmaschine (1) auf dem Prüfstand mit dem Mikrofon-Array (20) von der Strömungsmaschine (1) abgegebene Geräusche erfasst werden (51) ,
ii) die mit dem Mikrofon-Array (20) erfassten Geräusche mit Fehlerzuständen abgeglichen werden (52), die an der Strömungsmaschine (1) beobachtet werden.

13. Verfahren nach Anspruch 12, bei welchem an der Strömungsmaschine (1) auf dem Prüfstand ermittelte Daten zusätzlich um Daten aus dem Feld ergänzt werden.

14. Strömungsmaschine (1), insbesondere Flugtriebwerk (10), die für ein Verfahren nach einem der vorstehenden Ansprüche eingerichtet ist, also mit einem Mikrofon-Array (20) ausgestattet ist, welches mindestens zwei Mikrofone (21) aufweist, die bezogen auf eine Längsachse (5) der Strömungsmaschine (1) auf unterschiedlichen Axialpositionen (25) und/oder Umlaufpositionen (35) angeordnet sind,

15. Verwendung einer Strömungsmaschine (1) nach Anspruch 14 in einem Verfahren nach einem der Ansprüche 1 bis 13.
